# EUROPEAN PATENT SPECIFICATION

(11) **EP 4 463 419 B1**
(45) Date of publication and mention of the grant of the patent: **08.04.2026**
(21) Application number: 22844500.3
(22) Date of filing: 27.12.2022
(51) Int. Cl.: C01D 15/02, C01G 45/12, C01G 49/00, C01G 51/00, C01G 53/00

(54) **POWDERED LITHIUM OXIDE, PROCESS FOR ITS PREPARATION AND ITS USE**
PULVERFÖRMIGES LITHIUMOXID, VERFAHREN ZU SEINER HERSTELLUNG UND SEINE VERWENDUNG
OXYDE DE LITHIUM EN POUDRE, SON PROCÉDÉ DE PRÉPARATION ET SON UTILISATION

(30) Priority: 10.01.2022 DE 102022100361
(43) Date of publication of application: 20.11.2024
(73) Proprietor: Albemarle Germany GmbH, 60549 Frankfurt am Main (DE)
(72) Inventor: MAI, Mary, 38685 Langelsheim (DE); WIETELMANN, Ulrich, 61381 Friedrichsdorf (DE); HUEBNER, Alexander, 38640 Goslar (DE); KLÖSENER, Johannes, 38644 Goslar (DE); WESSELS, Katrin, 30519 Hannover (DE); WEILAND, Anja, 38685 Langelsheim (DE); JANSEN, Thomas, 38640 Goslar (DE); FROMMER, Tanita, 38723 Seesen (DE); REMPEL, Henrike, 38640 Goslar (DE); SANDERS, Rolf, 38678 Clausthal-Zellerfeld (DE)
(74) Representative: Uexküll & Stolberg
(86) International application number: PCT/EP2022/087917
(87) International publication number: WO 2023/131569

(56) References cited:
- EP-A1- 3 878 814
- KR-A- 20180 074 071
- KR-A- 20210 079 844

## Description

The invention relates to powdered, surface-rich lithium oxide, an economical process for producing the lithium oxide from lithium peroxide, and the use of the lithium oxide for the production of overlithiated lithium metal oxides. Overlithiated lithium metal oxides are used as cathode additives for the purpose of prelithiation for lithium ion batteries.

### State of the art

Lithium oxide is currently used as a raw material for the production of glasses, glass ceramics, ceramics as well as positive electrodes of lithium batteries. Furthermore, it can be used for the production of lithium hydroxide. Of particular importance is the use of Li₂O for the production of overlithiated metal oxides, which can alternatively be referred to as lithium-rich metal oxides. These are those lithium-containing oxide compounds that have an increased lithium content compared to the LIB cathode materials used as standard and can make this excess content available during the first charge/discharge cycle to compensate for irreversible lithium losses on the anode side. Examples of overlithiated metal compounds are: Li₅FeO₄, Li₂NiO₂, Li₆CoO₄, or an overlithiated manganese-containing spinel compound, especially Li₁₊ₓMn₂O₄ or Li₁₊ₓNi_{0.5}Mn_{1.5}O₄, where x = > 0 to 1.

Lithium oxide can be produced by combustion of lithium metal in an oxygen-containing atmosphere. This process is uneconomical because it starts from metallic lithium, which in turn is produced via energy-consuming fused-salt electrolysis.

Furthermore, lithium oxide can be obtained starting from the lithium base chemical lithium carbonate. The process according to

Li₂CO₃ → Li₂O + CO₂ (1)

requires very high temperatures of about 900-1000°C, preferably under reduced pressure. Due to intermediate melting of lithium carbonate, the oxide is usually formed in lumpy form, which must be ground before further use (D.S. Appleton, R.B. Poeppel in: Advances in Ceramics, Vol. 25, "Fabrication and properties of lithium ceramics," ed. I.J. Hastings and G.W. Hollenberg, 1989, 111-116). The strong corrosive effect of molten lithium salts at such high temperatures inevitably causes the introduction of undesirable impurities into the thermolysis product and the corrosion-induced destruction of the crucible materials used.

At a very low pressure of < 10⁻⁵ Torr, thermal decomposition can also occur below the Li₂CO₃ melting point of 720°C (T. Takahashi, H. Watanabe, Fusion Eng. Design 8 (1989) 399-405). However, such low pressures are not economically achievable in engineered apparatus.

The admixture of elemental carbon, such as carbon black, serves to accelerate lithium carbonate decomposition (J.-W. Kim, H.-G. Lee, Metallurgical Mater. Trans. B, 32B (2001) 17-24). This carbothermal decomposition does not require a vacuum but occurs under Ar flow, and it proceeds rapidly at temperatures above about 720°C (i.e., the melting point temperature of lithium carbonate) according to the following reaction in alumina crucibles:

Li₂CO₃ + C → Li₂O + 2 CO (2).

A disadvantage is the strong corrosive effect of the carbonate melt on the used container material alumina. The calcination product is thereby contaminated by aluminum.

Li₂O can further be produced by thermal decomposition of lithium peroxide, Li₂O₂:

Li₂O₂ → Li₂O + ½ O₂ (3) .

This process has the advantage that no melting or sintering phases are passed through and the Li₂O can be obtained directly in powder form. The calcination process starting from lithium peroxide is also characterized by lower energy costs, and corrosion of container materials is not expected due to mild calcination temperatures and the avoidance of melting phenomena.

P. Pierron, Bull. France Chim. 1939, 235-238, states that a pure white lithium oxide can be obtained by heating lithium peroxide to 300°C in a Pyrex tube. Details such as thermolysis time are not documented. In our own experiments, it was found that times of at least 20 hours are necessary to achieve > 90% conversion to lithium oxide at 300°C.

US-A-3 321 277 teaches to decompose granular porous Li₂O₂ at a temperature between 225 and 450°C to obtain granular Li₂O suitable for CO₂ absorption. In the example, calcination takes 22 hours and 47 minutes under a stream of argon at a temperature of 386°C.

US-A-4 732 751 describes a process for producing high-purity Li₂O by decomposition of Li2O2 in an inert atmosphere at temperatures of initially 350 to 450°C, followed by a calcination process under mild vacuum at 900°C.

KR 20200051931 teaches the use of Li₂O with primary particle sizes D50 ≤ 5 µm and secondary particle sizes D50 between 10 and 100 µm for the production of Li₂NiO₂, where the lithium oxide is produced by thermal decomposition of Li₂O₂ in the temperature range 400 - 600°C. In the example, the Li₂O is obtained by heat treatment at 420°C for 3 hours.

KR 20210079844 teaches the preparation of a finely divided grade of lithium peroxide (particle size 1-130 µm, preferably 5-50 µm) and its use for the preparation of lithium oxide. Calcination is carried out at a minimum of 300°C, preferably at 350-650°C. In the experiment, a temperature of 425°C is described.

CN 109336139 relates to a process for the preparation of high-purity nanometer lithium oxide, characterized in that lithium peroxide is decomposed to lithium oxide at temperatures of initially 350-500°C, then further calcined at 600-800°C and then ground to the desired fineness by means of a ball mill.

EP 3 878 814 discloses a method for preparing lithium oxide, comprising:
reacting hydrogen peroxide (H₂O₂) and lithium hydroxide (LiOH) to obtain over-lithiated oxide (Li₂O₂); and
heat-treating the over-lithiated oxide to obtain lithium oxide (Li₂O).

The heat treatment can be performed at 400 to 600 °C in an inert atmosphere.

The preparation of overlithiated nickel oxide, Li₂NiO₂, from nickel oxide and Li₂O, the latter obtained by thermal decomposition of Li₂O₂, is described in a publication by J. Kim et al. (Molecules 2019, 24, 4624). The Li₂O₂ calcination process is studied in the temperature range between 350 and 600°C. A Li₂O reaction product calcined at 450°C was used to prepare Li₂NiO₂. According to the cited literature (K. Kang et al., Chem. Mater. 2009, 16, 2685-2690), the mixture of NiO and Li₂O was ground in a ball mill under argon for one day and then the homogenized mixture was thermolyzed at 650°C under Ar atmosphere for 24 hours (Kang) or 12 hours (Kim) to give the final product Li₂NiO₂.

The known processes for the production of Li₂O from Li₂O₂ have the disadvantage that they either require unattractively long reaction times for commercial reasons (at least 20 hours at 300°C) or yield granular Li₂O or/and require a relatively high temperature of at least 350°C. Temperatures ≥ 350°C are not achievable in classical oil-fired reactors, but require furnace technologies. Furthermore, pyrolysis temperatures of 350°C and above result in Li₂O with low surface area, which is detrimental for solid/solid conversions such as in the preparation of overlithiated metal oxide compounds, for example Li₂NiO₂, from transition metal oxides and Li₂O. To achieve complete conversion of transition metal oxides with Li₂O at acceptable reaction times (< 12-24 hours), the materials must be intensively pre-painted. This process requires very long meals (24 hours) when using conventional Li₂O, for example, prepared by Li₂O₂ thermolysis ≥ 350°C. This causes high costs and, in addition, the input of impurities due to abrasion phenomena scales with the grinding time.

### Object

The invention is based on the object of providing a process that enables the production of a powdery lithium oxide with a high specific surface area and low density, which can be ground with the lowest possible energy input and can be advantageously converted into corresponding lithium metal oxides when mixed with transition metal oxides, for example nickel oxide.

### Description of the invention

It was surprisingly found that the calcination temperature has a significant effect on the morphology of the lithium oxide formed from lithium peroxide. This is shown in the following tabular overview:

| calcination temperature (°C) | calcination duration (hours) | spec. surface (m²/g) | bulk density (g/mL) | remarks |
|---|---|---|---|---|
| 285 | 30 | 14.7 | 0.1 | free flowing |
| 325 | 5 | 13.5 | 0.12 | free flowing |
| 350 | 2 | 8 | 0.15 | free flowing |
| 380 | 2 | 0.3 | 0.5 | free flowing |
| 425 | 2 | 0.4 | 0.7 | free flowing |
| 450 | 2 | 0.23 | 0.7 | free flowing |

A lithium peroxide with a specific surface area between 15 and 20 m²/g and a peroxide content of at least 97% (remainder to 100% consists essentially of LiOH and Li₂CO₃) was used for the experiments. All experiments were performed under inert gas atmosphere consisting of nitrogen, i.e. excluding air, respectively O₂, CO₂ and H₂O.

It can be seen that up to a temperature in the range of 325°C, a product quality with high specific surface area (≥ 10 m²/g) is obtained. When reaching and exceeding about 350°C, the specific surface area decreases sharply. At the same time, the bulk density becomes larger.

The Li₂O variant with a higher surface area is easier to grind and can therefore be brought more quickly and with less energy input into the particle size range required for conversion with finely divided metal oxides, i.e. particle sizes < 20 µm, preferably < 10 µm.

The lithium peroxide used for the process according to the invention has a Li₂O₂ content (by weight) of at least 95%, preferably at least 97% and particularly preferably at least 98%, measured by manganometric titration. The balance to 100% consists essentially of LiOH and Li₂CO₃. From impure lithium peroxide grades, a surface-rich lithium oxide is also formed when the mild calcination temperatures are applied, but this generally contains undesirable granular components and the contents of carbonate and hydroxide remaining in the Li₂O interfere with its use in the preparation of the overlithiated lithium transition metal oxides.

According to BET determination, the specific surface area of the lithium peroxide used is 5 to 30 m²/g, preferably 10 to 30 m²/g more preferably 15 to 20 m²/g.

The calcination is carried out under exclusion of ambient air, especially under exclusion of compounds reactive to lithium oxide and/or lithium peroxide. These are water (moisture), CO₂ and other air trace components. Therefore, calcination is preferably carried out either under inert gas (argon, helium, nitrogen) or in vacuum (< 10 mbar). Furthermore, synthetic, dry and CO₂-free air can be used. Because of the mild reaction temperatures, there are no special requirements for the container material, i.e. most heat-resistant materials, metals as well as glasses (e.g. borosilicate glass, quartz glass) and ceramics (aluminum oxide, porcelains, etc.) can be used.

Calcination is carried out either statically, i.e. the Li₂O₂ starting material is placed in crucibles and calcined in furnaces, or under mixing conditions, i.e. in stirred tank reactors, rotary tubes, or heatable mixing units (e.g. vertical or horizontal dryers, tumble dryers and the like). Fluidized bed reactors can also be used.

The calcination temperature is in the range between 280 and 370°C, preferably 300 and 350°C, more preferably 310 to 350°C, particularly preferably 310 to 340°C. The calcination time to achieve complete conversion depends on the temperature used. Calcination is carried out until the lithium peroxide residue content is a maximum of 5, preferably a maximum of 2, particularly preferably a maximum of 1 wt%. This is achieved by calcination durations of between 1 and 30, in particular 1 to 20, preferably 1 to 10 hours.

The specific surface area of the powdered lithium oxide is at least 5 m²/g, preferably at least 8 m²/g and particularly preferably at least 10 m²/g. It is measured by gas adsorption, a method known as "BET measurement", named after the developers Stephen Brunauer, Paul Hugh Emmett and Edward Teller, according to the standard specification ASTM D6556. In the present case, the adsorption gas is nitrogen.

The powdered lithium oxide has a bulk density of max. 0.3 g/mL, preferably max. 0.2 g/mL, more preferably max. 0.15 g/mL. The bulk density is determined according to the EN ISO 60 standard.

The high surface area lithium oxide according to the invention is preferably used for the preparation of overlithiated metal compounds, the overlithiated metal compounds preferably consisting of: Li₅FeO₄, Li₂NiO₂, Li₆CoO₄, or an overlithiated manganese-containing spinel compound, in particular Li₁₊ₓMn₂O₄ or Li₁₊ₓNi_{0,5}Mn_{1,5}O₄, where x > 0 to 1. For this purpose, the surface-rich lithium oxide is reacted with the corresponding transition metal hydroxide or transition metal oxide or a mixture of different transition metal hydroxides or oxides.

Generally, the surface-rich lithium oxide is first intensively mixed and/or ground with the transition metal salt. Preferably, the mixture is ground in grinding media mills using hard grinding media such as balls, rods and the like consisting of metals (steels or nickel-based alloys) or hard ceramics (metal oxides, metal carbides, metal nitrides, etc.). The Vickers hardness of the grinding vessels and grinding media is at least 400, preferably at least 600. Materials made of stainless steels or metal oxides, for example aluminum oxide or zirconium oxide, are particularly preferred. Ball, rod or hammer mills can be used.

The subsequent reaction of the mixture of surface-rich lithium oxide and transition metal oxide or hydroxide to the overlithiated metal oxide is usually carried out in the absence of oxygen, i.e. in a reducing atmosphere, or in vacuo at pressures between 0.01 and 50 mbar at temperatures between 400 and 900°C. The reducing atmosphere consists of nitrogen or nitrogen compounds. The reducing atmosphere consists of nitrogen or a noble gas, preferably argon or helium. With regard to the atmosphere, however, there are exceptions, namely when the oxidation state of the transition metal in the starting oxide or hydroxide is lower than in the final product to be produced. In this case, an oxidizing atmosphere is necessary, at least temporarily. This will be explained with reference to some characteristic conversions.

For example, overlithiated lithium nickel oxide (Li₂NiO₂) is produced according to the state of the art (G. Cedar, Chem. Mater. 2004, 2685) by reacting lithium oxide with nickel oxide in an inert (i.e., reducing, oxygen-free) atmosphere:
1. ball mill 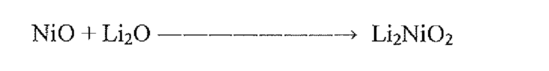
2. 650°C/24h-Ar

For this purpose, nickel oxide is first ground with the surface-rich lithium oxide in a ball mill and calcined under an inert argon atmosphere for 1 - 24 hours at about 650°C. Overlithiated lithium cobalt oxide Li₆CoO₄ is prepared by a solid/solid reaction by reacting CoO and Li₂O at 900°C under a nitrogen atmosphere (Yingying Zhou, dissertation 2021, https://doi.org/10.1498%/doctor.k22548). Li₅FeO₄ is prepared from Li₂O and Fe₃O₄ at 500 or 800°C is prepared under air atmosphere (M.V. Blanco et al., Chem. Eng. J. 354, 2018, 370-7) according to:

Fe₃O₄ + 7,5 Li₂O + 0,5 O₂ → 3 Li₅FeO₄

Fe₃O₄ contains two iron species, one with +2 oxidation state, the other with +3 oxidation state. To convert the +2 state to +3, the reaction is run at least temporarily under oxidizing conditions. In contrast, the same overlithiated metal compound is synthesized from a ground mixture of Fe₂O₃ (oxidation state of iron +3) and Li₂O by heating to first 450°C, then 750°C under inert conditions (W.M. Dose et al., J. Electrochem. Soc. 2020, 167 160543):

Fe₂O₃ + 5 Li₂O → 2 Li₅FeO₄

Overlithiated spinels such as Li₁₊ₓNi_{0,5}Mn_{1,5}O₄ are prepared by reacting the corresponding normal cathode material LiNi_{0,5}Mn_{1,5}O₄ with lithium oxide at 600°C under reducing conditions (G. Gabrielli et al., J. Power Sources, 351, 2017, 35).

### Examples

### Example 1. Preparation of surface-rich Li₂O from Li₂O₂ according to the invention.

In an Ar-filled glove box, 15.0 g of lithium peroxide (peroxide content 97.9%) was filled into a ceramic vessel consisting of alumina ceramic and placed in a hinged tube furnace with a borosilicate reaction tube under exclusion of air. A furnace temperature of 325°C was set under slight nitrogen overflow and held at this temperature for 5 hours.
Yield: 9.5 g of white fine powder (97% of theory).
Specific surface area: 13.5 m²/g
Bulk density: 0.12 g/mL
Li₂O content: 98.6 wt% (acidimetric titration)
Peroxide content: undetectable (< 0.5 wt%)

### Example 2. Preparation of Li₂NiO₂ from surface-rich Li₂O and NiO according to the invention.

In an Ar-filled glove box, 1.49 g (50 mmol) of lithium oxide (from Example 1) and 3.73 g (50 mmol) of nickel-(II)-oxide (nanopowder from Sigma-Aldrich, 99.8% purity based on trace metal impurities) were mixed in an agate mortar and ground using a pestle.

This mixture was then filled into a crucible consisting of alumina and placed in a hinged tube furnace with the air largely excluded. The heated, nitrogen-permeated furnace tube was made of Inconell 601.

The ground mixture was calcined at a furnace temperature of 650°C for 10 hours.

After cooling to RT, the crucible was introduced into an Ar-filled glove box under exclusion of air.

Yield: 5.1 g (98% of theory).

XRD: nearly phase-pure Li₂NiO₂ (Immm structure); traces (< 1 %) of NiO.

## Claims

1. Process for the preparation of powdered lithium oxide Li₂O having a specific surface area according to BET of at least 5 m₂/g and a bulk density of at most 0.3 g/ml
**characterized in that**
powdered lithium peroxide Li₂O₂ with a minimum content of Li₂O₂ of 95 wt.%, is calcined at temperatures of 280 to 370°C under inert gas conditions or in vacuo at pressures < 10 mbar until the reaction according to
Li₂O₂ → Li₂O + ½ O₂
to lithium oxide Li₂O has taken place to at least 95%, based on the weight of the calcined reaction product.

2. Process according to claim 1, **characterized in that** the Li₂O₂ residual content after calcination is at most 2% by weight, preferably at most 1% by weight, based on the weight of the calcined reaction product.

3. Process according to claim 1 or 2, **characterized in that** the inert gas is selected from nitrogen, argon, helium or dry, CO₂-free air.

4. Process according to any one of claims 1 to 3, **characterized in that** the calcination period is 1 to 30, in particular 1 to 20, preferably 1 to 10 hours.

5. Process according to any one of claims 1 to 4, **characterized in that** the powdered lithium peroxide has a Li₂O₂ content of at least 97 wt.%, preferably at least 98 wt.%.

6. Process according to any one of claims 1 to 5, **characterized in that** the calcination temperature is 300 to 350°C, preferably 310 to 350°C, in particular 310 to 340°C.

7. Process according to any one of claims 1 to 6, **characterized in that** the specific surface area of the lithium peroxide used according to BET is 5 to 30 m²/g, preferably 10 to 30 m²/g more preferably 15 to 20 m²/g.

8. Powdered lithium oxide Li₂O, **characterized in that** it has a specific surface area according to BET of at least 5 m²/g and a bulk density of at most 0.3 g/ml.

9. Powdered lithium oxide according to claim 8, **characterized in that** it has a specific surface area according to BET of at least 8, preferably at least 10 m²/g, more preferably at least 12 m²/g, still more preferably at least 15 m²/g.

10. Powdered lithium oxide according to claim 8 or 9, **characterized in that** it has a bulk density of at most 0.2 g/mL, preferably at most 0.12 g/mL.

11. Process for the preparation of overlithiated metal oxides, **characterized in that** one or more oxidic transition metal salt(s) is/are intensively mixed and/or ground with the powdered lithium oxide Li₂O according to one of claims 8 to 10 or prepared according to one of claims 1 to 7 and then reacted in a calcination process at a temperature in the range of 400 to 900°C under inert gas or in vacuum at < 50 mbar to give the overlithiated metal oxides.

12. Process according to claim 11, **characterized in that** the oxidic transition metal salt or salts are selected from the substance groups of transition metal oxides or transition metal hydroxides.

13. Process according to claim 11 or 12, **characterized in that** the oxidic transition metal salts are selected from nickel, manganese, cobalt or iron oxides, preferably from NiO, CoO, Fe₂O₃, Fe₃O₄ and FeO, particularly preferably from NiO, CoO and Fe₂O₃ or the corresponding hydroxide compounds.

14. Process according to one of claims 11 to 13, **characterized in that** the calcination is carried out under reducing conditions, in particular an oxygen-free atmosphere or in a vacuum at 0.01 to 50 mbar, in the case of identical transition metal oxidation stages in the raw material as in the end product.

15. Process according to any one of claims 11 to 14, **characterized in that** the reducing atmosphere is selected from nitrogen, argon and helium.

16. Process according to any of claims 11 to 15, **characterized in that** the overlithiated metal oxides are selected from Li₅FeO₄, Li₂NiO₂, Li₆CoO₄ or an overlithiated manganese-containing spinel compound, in particular Li₁₊ₓMn₂O₄ or Li₁₊ₓNi_{0,5}Mn_{1,5}O₄, where x => 0 to 1.

17. Use of a lithium oxide according to any one of claims 8 to 10 or a lithium oxide prepared by the process according to any one of claims 1 to 7 for the preparation of overlithiated metal oxides, in particular selected from Li₃FeO₄, Lᵢ₂NiO₂, Li₆CoO₄, or an overlithiated manganese-containing spinel compound, preferably Li₁₊ₓMn₂O₄ or Li₁₊ₓNi_{0,5}Mn_{1,5}O₄, where x = > 0 to 1, **characterized in that** one or more oxidic transition metal salt(s) is/are intensively mixed and/or ground with the lithium oxide and then reacted in a calcination process under reducing atmosphere or in vacuum from 0.01 to 50 mbar to the overlithiated metal oxides.

## Patentansprüche

1. Verfahren zur Herstellung von pulverförmigem Lithiumoxid Li₂O mit einer spezifischen Oberfläche gemäß BET von mindestens 5 m²/g und einer Schüttdichte von höchstens 0,3 g/ml,
**dadurch gekennzeichnet, dass**
pulverförmiges Lithiumperoxid Li₂O₂ mit einem Mindestgehalt an Li₂O₂ von 95 Gew.-% bei Temperaturen von 280 bis 370 °C unter Inertgasbedingungen oder im Vakuum bei Drücken < 10 mbar kalziniert wird, bis die Reaktion gemäß
Li₂O₂ → Li₂O + ½ O₂
zu Lithiumoxid Li₂O zu mindestens 95 %, bezogen auf das Gewicht des kalzinierten Reaktionsprodukts, erfolgt ist.

2. Verfahren nach Anspruch 1, **dadurch gekennzeichnet, dass** der Li₂O₂-Restgehalt nach dem Kalzinieren höchstens 2 Gew.-%, bevorzugt höchstens 1 Gew.-%, bezogen auf das Gewicht des kalzinierten Reaktionsprodukts, beträgt.

3. Verfahren nach Anspruch 1 oder 2, **dadurch gekennzeichnet, dass** das Inertgas aus Stickstoff, Argon, Helium oder trockener, CO₂-freier Luft ausgewählt ist.

4. Verfahren nach einem der Ansprüche 1 bis 3, **dadurch gekennzeichnet, dass** die Kalzinierungsdauer 1 bis 30, insbesondere 1 bis 20, bevorzugt 1 bis 10 Stunden beträgt.

5. Verfahren nach einem der Ansprüche 1 bis 4, **dadurch gekennzeichnet, dass** das pulverförmige Lithiumperoxid einen Li₂O₂-Gehalt von mindestens 97 Gew.-%, bevorzugt mindestens 98 Gew.-%, aufweist.

6. Verfahren nach einem der Ansprüche 1 bis 5, **dadurch gekennzeichnet, dass** die Kalzinierungstemperatur 300 bis 350°C, bevorzugt 310 bis 350°C, insbesondere 310 bis 340°C beträgt.

7. Verfahren nach einem der Ansprüche 1 bis 6, **dadurch gekennzeichnet, dass** die spezifische Oberfläche des verwendeten Lithiumperoxids gemäß BET 5 bis 30 m²/g, bevorzugt 10 bis 30 m²/g, noch bevorzugter 15 bis 20 m²/g beträgt.

8. Pulverförmiges Lithiumoxid Li₂O, **dadurch gekennzeichnet, dass** es eine spezifische Oberfläche gemäß BET von mindestens 5 m²/g und eine Schüttdichte von höchstens 0,3 g/ml aufweist.

9. Pulverförmiges Lithiumoxid nach Anspruch 8, **dadurch gekennzeichnet, dass** es eine spezifische Oberfläche gemäß BET von mindestens 8, bevorzugt mindestens 10 m²/g, noch bevorzugter mindestens 12 m²/g, noch mehr bevorzugt mindestens 15 m²/g aufweist.

10. Pulverförmiges Lithiumoxid nach Anspruch 8 oder 9, **dadurch gekennzeichnet, dass** es eine Schüttdichte von höchstens 0,2 g/ml, bevorzugt höchstens 0,12 g/ml, aufweist.

11. Verfahren zur Herstellung von überlithiierten Metalloxiden, **dadurch gekennzeichnet, dass** ein oder mehrere oxidische Übergangsmetallsalz(e) mit dem pulverförmigen Lithiumoxid Li₂O gemäß einem der Ansprüche 8 bis 10 oder hergestellt gemäß einem der Ansprüche 1 bis 7 intensiv gemischt und/oder vermahlen wird/werden, und dann in einem Kalzinierungsprozess bei einer Temperatur im Bereich von 400 bis 900°C unter Inertgas oder im Vakuum bei < 50 mbar zu den überlithiierten Metalloxiden umgesetzt wird/werden.

12. Verfahren nach Anspruch 11, **dadurch gekennzeichnet, dass** das oxidische Übergangsmetallsalz oder die oxidischen Übergangsmetallsalze aus den Stoffgruppen der Übergangsmetalloxide oder Übergangsmetallhydroxide ausgewählt sind.

13. Verfahren nach Anspruch 11 oder 12, **dadurch gekennzeichnet, dass** die oxidischen Übergangsmetallsalze aus Nickel-, Mangan-, Kobalt- oder Eisenoxiden, bevorzugt aus NiO, CoO, Fe₂O₃, Fe₃O₄ und FeO, besonders bevorzugt aus NiO, CoO und Fe₂O₃ oder den entsprechenden Hydroxidverbindungen, ausgewählt sind.

14. Verfahren nach einem der Ansprüche 11 bis 13, **dadurch gekennzeichnet, dass** die Kalzinierung unter reduzierenden Bedingungen, insbesondere in einer sauerstofffreien Atmosphäre oder im Vakuum bei 0,01 bis 50 mbar, durchgeführt wird, wenn im Rohmaterial und im Endprodukt identische Übergangsmetalloxidationsstufen vorliegen.

15. Verfahren nach einem der Ansprüche 11 bis 14, **dadurch gekennzeichnet, dass** die reduzierende Atmosphäre aus Stickstoff, Argon und Helium ausgewählt ist.

16. Verfahren nach einem der Ansprüche 11 bis 15, **dadurch gekennzeichnet, dass** die überlithiierten Metalloxide aus Li₅FeO₄, Li₂NiO₂, Li₆CoO₄ oder einer überlithiierten manganhaltigen Spinellverbindung, insbesondere Li₁₊ₓMn₂O₄ oder Li₁₊ₓNi_{0,5}Mn_{1,5}O₄, wobei x = > 0 bis 1, ausgewählt sind.

17. Verwendung eines Lithiumoxids gemäß einem der Ansprüche 8 bis 10 oder eines nach einem der Verfahren gemäß einen der Ansprüchen 1 bis 7 hergestellten Lithiumoxids, zur Herstellung von überlithiierten Metalloxiden, die insbesondere aus Li₅FeO₄, Li₂NiO₂, Li₆CoO₄ oder einer überlithiierten manganhaltigen Spinellverbindung, bevorzugt Li₁₊ₓMn₂O₄ oder Li₁₊ₓNi_{0,5}Mn_{1,5}O₄, wobei x = > 0 bis 1, ausgewählt sind, **dadurch gekennzeichnet, dass** ein oder mehrere oxidische Übergangsmetallsalz(e) mit dem Lithiumoxid intensiv gemischt und/oder vermahlen und dann in einem Kalzinierungsprozess unter reduzierender Atmosphäre oder im Vakuum von 0,01 bis 50 mbar zu den überlithiierten Metalloxiden umgesetzt wird/werden.

## Revendications

1. Procédé de préparation d'oxyde de lithium Li₂O en poudre présentant une aire spécifique BET d'au moins 5 m²/g et une masse volumique apparente d'au plus 0,3 g/mL,
**caractérisé en ce que**
du peroxyde de lithium Li₂O₂ en poudre, ayant une teneur minimale en Li₂O₂ de 95 % en poids, est calciné à des températures de 280 à 370 °C, sous atmosphère de gaz inerte ou sous vide sous pression inférieure à 10 mbar, jusqu'à ce que la réaction suivante:
Li₂O₂ → Li₂O + ½ O₂
donnant de l'oxyde de lithium Li₂O se soit déroulée à un degré d'au moins 95 %, degré calculé sur la base du poids du produit de réaction calciné.

2. Procédé conforme à la revendication 1, **caractérisé en ce que** la teneur résiduelle en Li₂O₂ après calcination vaut au plus 2 % en poids, et de préférence, au plus 1 % en poids, par rapport au poids du produit de réaction calciné.

3. Procédé conforme à la revendication 1 ou 2, **caractérisé en ce que** le gaz inerte est choisi parmi de l'azote, de l'argon, de l'hélium et de l'air sec sans CO₂.

4. Procédé conforme à l'une des revendications 1 à 3, **caractérisé en ce que** la durée de la calcination est de 1 à 30 heures, en particulier de 1 à 20 heures et de préférence de 1 à 10 heures.

5. Procédé conforme à l'une des revendications 1 à 4, **caractérisé en ce que** le peroxyde de lithium Li₂O₂ en poudre présente une teneur en Li₂O₂ d'au moins 97 % en poids, et de préférence, d'au moins 98 % en poids.

6. Procédé conforme à l'une des revendications 1 à 5, **caractérisé en ce que** la température de calcination vaut de 300 à 350 °C, de préférence de 310 à 350 °C, et en particulier de 310 à 340 °C.

7. Procédé conforme à l'une des revendications 1 à 6, **caractérisé en ce que** l'aire spécifique BET du peroxyde de lithium utilisé vaut de 5 à 30 m²/g, de préférence de 10 à 30 m²/g, et mieux encore de 15 à 20 m²/g.

8. Oxyde de lithium Li₂O en poudre, **caractérisé en ce qu'**il présente une aire spécifique BET d'au moins 5 m²/g et une masse volumique apparente d'au plus 0,3 g/mL.

9. Oxyde de lithium en poudre, conforme à la revendication 8, **caractérisé en ce qu'**il présente une aire spécifique BET d'au moins 8 m²/g, de préférence d'au moins 10 m²/g, mieux encore d'au moins 12 m²/g, et encore mieux d'au moins 15 m²/g.

10. Oxyde de lithium en poudre, conforme à la revendication 8 ou 9, **caractérisé en ce qu'**il présente une masse volumique apparente d'au plus 0,2 g/mL, et de préférence, d'au plus 0,12 g/mL.

11. Procédé de préparation d'oxydes de métaux sur-lithiés, **caractérisé en ce qu'**on mélange intimement et/ou moud un ou plusieurs sel(s)-oxyde(s) de métal de transition avec de l'oxyde de lithium Li₂O en poudre, conforme à l'une des revendications 8 à 10 ou préparé selon un procédé conforme à l'une des revendications 1 à 7, et **en ce qu'**on fait réagir le tout, en procédant par calcination à une température située dans l'intervalle allant de 400 à 900 °C, sous atmosphère de gaz inerte ou sous vide, sous une pression inférieure à 50 mbar, pour obtenir des oxydes de métaux sur-lithiés.

12. Procédé conforme à la revendication 11, **caractérisé en ce que** le ou les sel(s)-oxyde(s) de métal de transition est ou sont choisi(s) parmi l'ensemble des oxydes de métal de transition et hydroxydes de métal de transition.

13. Procédé conforme à la revendication 11 ou 12, **caractérisé en ce que** les sels-oxydes de métal de transition sont choisis parmi les oxydes de nickel, de manganèse, de cobalt ou de fer, et de préférence, parmi NiO, CoO, Fe₂O₃, Fe₃O₄ et FeO, avec une préférence particulière pour NiO, CoO et Fe₂O₃, ou parmi les hydroxydes correspondants.

14. Procédé conforme à l'une des revendications 11 à 13, **caractérisé en ce que** la calcination est opérée dans des conditions réductrices, en particulier sous une atmosphère sans oxygène ou sous vide, sous une pression de 0,01 à 50 mbar, dans le cas où les états d'oxydation des métaux de transition sont identiques dans la matière première et dans le produit final.

15. Procédé conforme à l'une des revendications 11 à 14, **caractérisé en ce que** l'atmosphère réductrice est choisie parmi de l'azote, de l'argon et de l'hélium.

16. Procédé conforme à l'une des revendications 11 à 15, **caractérisé en ce que** les oxydes de métaux sur-lithiés sont choisis parmi Li₅FeO₄, Li₂NiO₂, Li₆CoO₄, et un composé de type spinelle contenant du manganèse et sur-lithié, en particulier Li₁₊ₓMn₂O₄ ou Li₁₊ₓNi_{0,5}Mn_{1,5}O₄ où x vaut de plus de 0 à 1.

17. Utilisation d'un oxyde de lithium conforme à l'une des revendications 8 à 10, ou d'un oxyde de lithium préparé selon un procédé conforme à l'une des revendications 1 à 7, pour la préparation d'oxydes de métaux sur-lithiés, choisis en particulier parmi Li₅FeO₄, Li₂NiO₂, Li₆CoO₄, et un composé de type spinelle contenant du manganèse et sur-lithié, en particulier Li₁₊ₓMn₂O₄ ou Li₁₊ₓNi_{0,5}Mn_{1,5}O₄ où x vaut de plus de 0 à 1, **caractérisée en ce qu'**on mélange intimement et/ou moud un ou plusieurs sel(s)-oxyde(s) de métal de transition avec l'oxyde de lithium et **en ce qu'**on fait réagir le tout, en procédant par calcination sous atmosphère réductrice ou sous vide, sous une pression de 0,01 à 50 mbar, pour obtenir des oxydes de métaux sur-lithiés.
